# EUROPEAN PATENT APPLICATION

(11) **EP 3 747 627 A1**
(43) Date of publication of application: **09.12.2020**
(21) Application number: 19178362.0
(22) Date of filing: 05.06.2019
(51) Int. Cl.: B29C 53/56, B28B 23/14, B29C 70/38

(54) **MANUFACTURING PROCESS OF A COMPOSITE TAPE AND CORRESPONDING COMPOSITE TAPE, METHOD FOR PRODUCING A COMPOSITE VESSEL USING SAID COMPOSITE TAPE, AND COMPOSITE VESSEL OBTAINED THEREOF**

(71) Applicant: L'AIR LIQUIDE SA, 75007 Paris (FR); Covess N.V., 3510 Hasselt (BE)
(72) Inventor: GOUDALLE, Sébastien, 78350 LES LOGES EN JOSAS (FR); BLANC-VANNET, Pierre, 78350 LES LOGES EN JOSAS (FR); PAPIN, Philippe, 78350 LES LOGES EN JOSAS (FR); DEL-GALLO, Pascal, 78350 LES LOGES EN JOSAS (FR); Vanswijgenhoven, Tony, 3510 Hasselt (BE); De Clippeleir, Johan, 3051 Sint-Joris-Weert (BE)
(74) Representative: Cabinet Camus Lebkiri

(57) **Abstract**

Composite tape comprising a fibre-reinforced polymer material (61) comprising at least one first polymer material and at least one fibrous material, characterized in that the rate (Q) of the polymer material in the fibre-reinforced polymer material varies along the composite tape (1).

## Description

### TECHNICAL FIELD OF THE INVENTION

The technical field of the invention is that of composite materials, and particularly that of composite tapes, especially the composites tapes used in the manufacturing of composite vessel.
The present invention relates to a composite tape, and a manufacturing process to produce such tape.

### TECHNOLOGICAL BACKGROUND

Composite material comprising fibre-reinforced polymers are well known, especially in the manufacturing of pressure vessels as they are lighter and can withstand higher pressure than other materials.

A classic approach to manufacture such vessels is to wound a composite tape comprising reinforce fibres and a polymer material around a liner, such as a cylindrical plastic bottle previously obtained by moulding. The pressure resistance is proportional to the density of fibres in the tape.

A first approach to optimize the weight and the mechanical performance of state-of-the-art pressure vessel is to adjust the winding of the composite tape, and specifically the orientation of the tape during the winding. Another approach is to vary the thickness of the winding, i.e. the thickness of the wall of the vessel.

However, the structures of the composite layers of the state-of-the-art pressure vessels are not fully optimized, which could result in unnecessary additional weight to the composite vessel.

The fibres represent the main cost in the manufacturing process of pressure vessels and as they are of a major importance in the mechanical resistance of the vessel, it is difficult to lower the cost of a pressure vessel without degrading its mechanical properties.

An existing solution is to wind several tapes with different fibre-polymer ratios but changing the tape during the process is complex and time consuming.

There is therefore a need for a cost-effective pressure vessel easy to produce, with an optimized structure.

### SUMMARY OF THE INVENTION

The invention offers a solution to the problems mentioned above by proposing a composite vessel in which the rates of polymer and fibres vary along the thickness of its wall, and the manufacturing process of such a composite vessel. The manufacturing process comprises the use of a composite tape in which the rates of polymer and fibres vary continuously and longitudinally, said composite tape and its manufacturing process being part of the invention.

According to one aspect of the invention, it is proposed a composite tape comprising a fibre-reinforced polymer material comprising at least one first polymer material, for instance a thermoplastic material or a thermoset material, and at least one fibrous material, characterized in that the fibre-reinforced polymer material has a rate of the at least one first polymer material which varies along the composite tape, i.e. between the two ends of the composite tape.

In the present description of the invention, the term "fibrous material" is understood to mean fibres of a material, for example in the form of a fibrous support.

And, the term "rate" should be understood here as the amount of polymer, for example the polymer weight, expressed as a percentage of the total amount of polymer and fibre in the fibre-reinforced polymer material.

The rate (Q) may vary according to a variation ranging between 0,03 % per meter and 80 % per meter.

The rate may vary continuously along the composite tape.

Thanks to the composite tape according to the invention, it is possible to have a variation of the rates of fibres and polymer material along the length of the tape. For instance, the variation of the rates of polymer and fibres may result from a variation in the amount of polymer, for instance the weight of polymer, in the fibre-reinforced polymer material. The use of such tape is very advantageous in methods to produce composite vessel, as mentioned below.

The tape may comprise a plurality of polymer materials.

Having different polymer materials in a single tape is very advantageous as it permits to have a composite tape with different properties along its length.

The composite tape may comprise at least a first longitudinal portion comprising the at least one first polymer material and a second longitudinal portion comprising at least one second polymer material different from the at least one first polymer material, the first longitudinal portion and the second longitudinal portion being at least partially distinct.

The at least one fibrous material may comprise carbon fibres, or the at least one fibrous material may comprise glass fibres. The tape according to the invention is not limited by the nature of the fibrous material.

According to another aspect of the invention, it is proposed a method for producing composite tape comprising a fibre-reinforced polymer material comprising at least one first polymer material, for instance a thermoset or thermoplastic material, and at least one fibrous material, the process comprising an impregnating step comprising an impregnating of a support with powder, the impregnating step comprising a deposition step comprising a deposition of the powder (12) on the support (4), the support comprising the at least one fibrous material and the powder comprising the at least one polymer material, the impregnating step being performed in such way that the rate of the at least one first polymer material in the fibre-reinforced polymer material varies along the tape.

The impregnating step may be performed in such way that the rate of the at least one first polymer material in the fibre-reinforced polymer material varies continuously along the tape.

The deposition step may comprise a variation of the flow rate of the deposition of the powder along the support.

By varying the flow rate of deposition, the quantity of powder which could potentially impregnate the support varies along the tape. Moreover, during the deposition, a substantial part of the powder impregnates the support.

The method may comprise, prior to the impregnating step, a heating step comprising an exposition of the support to a heat source, and a variation of the power of the heat source transmitted to the support.

Heating the support leads to a partial opening of the fibrous material, at least near the surface of the support that receive the powder. In other term, the heating increases the impregnation capacity of the support by reducing the fibres density of the support, while maintaining the mechanical properties of the support.

The variation of the power of the heat source transmitted to the support may comprise a variation of the distance of the heat source from the support or a variation of the effective heating power of the heat source, for instance a variation of the power supply of the heat source.

The impregnating step may comprise, after or during the deposition step, an application of a periodical movement to the powder, the periodical movement being relative to the support, and a variation of the frequency and/or the amplitude of the periodical movement along the support.

The application of such a movement eases the impregnation of the powder. To some extent, the variation of the frequency or the variation of the amplitude of the movement is proportional to the impregnation rate of the powder.

The composite tape may comprise a plurality of polymer materials, the method comprising a first impregnating step of at least a first polymer material on a first longitudinal portion of the support and a second impregnating step of at least a second polymer material different from the first polymer material on a second longitudinal portion of the tape, the first longitudinal portion and the second longitudinal portion being at least partially distinct or combined.

According to another aspect of the invention, it is proposed a method for producing a pressure vessel, comprising a winding step comprising a winding of a composite tape according to the previous description.

It has been observed that the stress around a cylindrical composite vessel decreases with the distance from the inside of the vessel, and therefore the need of fibres is less important at the peripheral region of the vessel.

It is therefore advantageous to have pressure vessel in which the quantity of fibres is optimized.

Using a composite tape according to the invention is very advantageous as it permits to produce a composite vessel having rates of polymer material and fibrous material varying along the thickness of its wall, and specifically varying continuously. Moreover, such vessel may be obtained using one composite tape, which is advantageous comparing to the use of multiple composite tape having different rates.

According to another aspect of the invention, it is proposed a composite vessel, for instance a pressure vessel, produced by the previously described method, comprising a leak-tight barrier layer forming an inner surface of the vessel and a composite layer located around the barrier layer and comprising a fibre-reinforced polymer material, the rate of the quantity of the polymer material in the fibre-reinforced polymer material varies continuously along the thickness of the composite layer.

Such a composite vessel has a structure optimized to the mechanical constraint, which is advantageous regarding the weight and the mechanical properties of the vessel.

The composite vessel may be a fuel tank for a motorized vehicle, for instance a ship, a train, a satellite, a rocket, etc.

Other features and advantages of the invention will become apparent from the description of embodiments of the invention, in no way limiting, and the accompanying drawings presented for information only and not at all restrictive of the invention.

### BRIEF DESCRIPTION OF THE FIGURES

- Figures 1 shows a composite tape according to an embodiment of the invention,
- figure 2 to 4 show rates of polymer material and fibrous material in composite tapes according to different embodiments of the invention,
- figure 5 shows an installation to implement a method according to an embodiment of the invention,
- figure 6 shows different steps of a method according to an embodiment of the invention,
- figure 7 and 8 show different views of a composite vessel according to an embodiment of the invention,
- figure 9 shows an application of a composite vessel according to the invention.

### DESCRIPTION DETAILLEE D'AU MOINS UN MODE DE REALISATION DE L'INVENTION

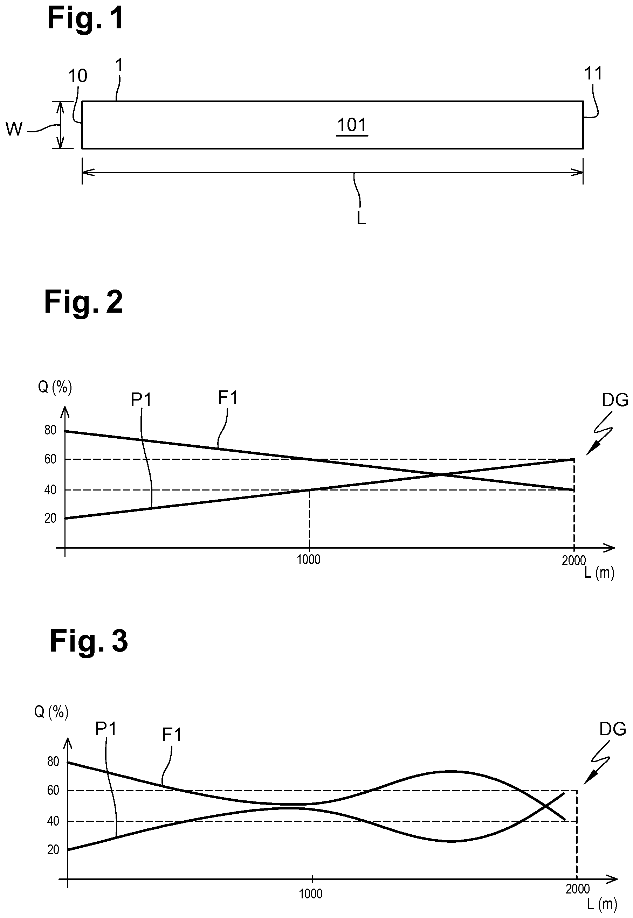

Figure 1 show a composite tape 1 according to an aspect of the invention, for instance here a composite tape suitable for the production of leak-tight pressure vessels, i.e. suitable to be wound and consolidate.

The composite tape 1 of this embodiment comprises a fibre-reinforced polymer material 101 comprising one fibrous material, for instance in this embodiment glass fibres, and one polymer material, for instance in this embodiment polyamide-6, i.e. a thermoplastic material. The composite tape 1 has a width W of 12,5 millimetres, a length L of 2000 metres, and a thickness of 0,250 millimetre.

Figure 2 is a diagram DG illustrating the rate Q of polymer material and fibrous material in the fibre-reinforced polymer material 101 along the length L of the tape 1. A first curve P1 illustrates the rate Q of polymer material, and a second curve F1 illustrates the rate of the fibrous material.

The rate Q varies continuously and linearly along the length of the tape. More precisely, the rate Q of polymer material in the fibre-reinforced polymer material 101 is 20% at a first end 10 of the tape 1, and 60% at a second end 11 of the tape 1, and as the rate Q of polymer material vary linearly along the length, the rate Q is 40% at middle length of the composite tape 1. In this embodiment the variation of the rate Q is monotonous, that is to say the rate Q of polymer material only increases.

This example is not limitative of the invention, and the composite tape 1 could have any other dimension, could comprise any other fibrous material, such as S-glass fibres, EC-R glass fibres, carbon fibres, high modulus carbon fibres, and any other polymer material, such as thermoplastic or thermoset material for instance polypropylene, polyamide-12, etc. The man skilled in the art will choose the proper materials depending on the field of application of the invention.

Alternatively, the variation of the rate of polymer material in the fibre-reinforced polymer material 101 of the composite tape 1 could be non-linear, and/or non-monotonous, that is to say increasing and decreasing, and/or discontinuous.

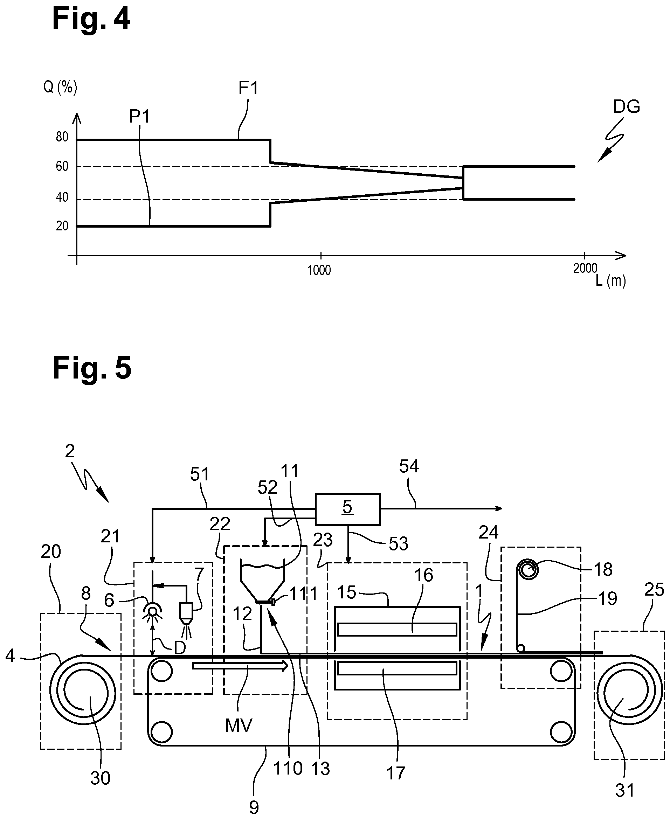

Figure 3 shows an embodiment of a composite tape having a non-linear and non-monotonous variation of the rate Q of polymer material, and figure 4 shows another embodiment in which the rate Q varies discontinuously and monotonously along the length.

The embodiment described above are not restrictive of the invention, and it would be possible that the composite tape 1 comprises not only a variation of the rate Q, but also a variation of the nature of the polymer material along its length. For instance, the fibre-reinforced polymer material 101 of the composite tape 1 could comprise a first thermoplastic or thermoset material on a first portion of its length, for instance a first portion corresponding to the first 1000 metres of the tape, and a second thermoplastic or thermoset material different from the first thermoplastic or thermoset material on a second portion of its length, for instance a portion corresponding to the last 1000 metres of the tape. For instance, the composite tape could comprise polyamide-6 and polypropylene. The fibre-reinforced polymer material 101 could also comprise more than two polymer materials.

Alternatively, the first portion and the second portion could overlap, or in other term be combined, forming therefore a third portion of the composite tape 1 comprising several different polymer materials. For instance, the first portion could correspond to the first 1200 metres of the length of the tape, the second portion could correspond to the last 1200 metres of the length of the tape, forming therefore the third portion extending from 800 metres to 1200 meters.

The composite tape 1 can be produced by a method according to the invention.

Figure 5 shows an installation 2 to implement such a method. The installation 2 is configured to perform an impregnating step, in which a continuous porous support 4, for instance here a support comprising fibres, passing through the installation 2 onto a conveyor belt 9 is impregnated with a powder polymer material 12.

The installation 2 comprises a control unit 5 and a plurality of successive stations 20 to 25, each station being suitable to implement a step of an embodiment of the method according to the invention. The control unit 5 is configured to control the conveyor belt 9 and some of the stations 20 to 25 by sending control signals to the corresponding stations and to a motor (not shown) of the conveyor belt.

A first station 20, or unwinding station, comprise a roll 30 of the porous support 4, for instance here glass fibres, and is configured to unwound the porous support 4 onto the conveyor belt 9. The conveyor belt applies a movement MV to the support 4 so as to move it away from the first station.

The unwound porous support 4 then passes into a second station 21, or heating station, configured to perform a heating step by heating or partially heating the support 4 with a heat source 6. The heating implemented by the second station 21 ensures a partial opening of the fibrous support 4. A partial opening of the fibrous support permits advantageously to increase the penetration rate of powder materials 12 during a subsequent step of the method, as will be described below.

In the example, the heat source 6 is formed by a ramp of an infrared source arranged facing an upper face 8 of the fibrous support 4 on which the powder material will be deposited. The heat source 6 is distant from the upper face 8 from a variable distant D.

Of course, different heat source 6 variants may be used, in particular multiple ramps of radiation heating sources, or even one or more convection heating sources configured to deliver a breath of air or gas previously heated.

The second station 21 further comprises sensors 7, for instance here radiation sensors and / or temperature sensors to detect the temperature in the immediate vicinity of the fibrous support 4, so as to inform the control unit 5 during the process, which adjust in response the power and/or the position of the heat source by sending the heat control signal 51 to the heating source 6.

For instance, the heat control signal can have a plurality of discrete values, each value corresponding to a position of the heat source 6 and/or to a specific power delivered by the heat source.

It should be noted here that a variation of the power of the source and a variation of the distance D are two different ways to reach a similar result, which is a variation of the heating power applied to the support 4, i.e. a variation of the temperature of the support.

For instance, by using forced convection heating, the flow of hot fluid blown onto the support can be adapted during the process depending on the desired treatment depth, and the desired opening.

The temperature applied to the support 4 can therefore be adjusted in order to vary the extent of the partial opening of the fibrous support 4, and therefore to vary the penetration rate of the polymer powder 12 along the length of the porous material 4.

It would be possible that the sensors 7 be present on both sides of the support, to evaluate a temperature gradient resulting from the density gradient of the support. By way of example, it is thus possible to use pyrometers as temperature sensors.

It would be possible that the second station 21 comprises two distinct heat sources each configured to apply heat on an opposite face of the composite tape.

Subsequently, the fibrous support 4 reaches a third station 22, or deposition station configured to perform a deposition step. The third station 22 comprises deposition means 11 suitable to deposit powder material 12 on the upper face 8 of the support 4 according to a variable flow rate, in order to form a layer 13 on the upper face 8. In this embodiment, the deposition means 11 comprises a hopper comprising an opening 110.

It should be noted that during the deposition of the powder material 12, a significant amount of the powder material 12 impregnates the support 4.

In order to adapt the quantity of powder material 12 in the layer 13, i.e. the quantity of powder material 12 that will potentially impregnate the support 4, the variable flow rate of the powder material 12 through the opening 110 can be adjusted during the implementation of the method. For example, the opening 110 of the hopper 11 comprises an adjustable shutter 111 configured to seal more or less the opening 110 in response to a flow signal 52 from the control unit 5.

For instance, the flow signal 52 can take a plurality of values, each value corresponding to a position of the shutter. A first value of the flow signal corresponds to a closed position of the shutter 111, in which no powder 12 passes through the opening 110, and a second value of the flow signal corresponds to a fully opened position of the shutter 111, in which the flow rate is maximum. Other intermediate values of the flow signal 52 correspond to different intermediate opening positions of the shutter 111, and therefore to intermediate values of the flow rate of the deposition.

Of course, alternative deposition means 11 can be used, depending on the chosen applications. For instance, the deposition means could comprise several hoppers each containing a different powder material, the control unit 5 being further configured to select one of the hoppers for it to deliver the corresponding powder material while closing the other hoppers. It would therefore be possible to produce a tape comprising a variation of the nature of the polymer material along the length of the composite tape, for instance a composite tape having a first portion of its length comprising a first polymer material, for instance polyamide-6, and a second portion of its lengths comprising a second polymer material, for instance polypropylène.

Alternatively, the control unit could be configured to select several hoppers simultaneously, therefore leading to the production of a tape 1 comprising portions of its length in which the polymer material is a mix of several different polymer material.

Subsequently, the support 4 and the layer 13 of the powder material 12 penetrates inside a fourth station 23, or movement station, comprising movement means 15 which induces a periodical movement to the powder material 12, the movement being relative to the support 4, in order for the powder material 12 of the layer 13 to impregnate the support 4.

In the illustrated embodiment, the movement means 15 comprises two electrodes 16, 17, between which passes the support 4 and the layer 13 of powder material 12. An alternating electric field capable of moving the powder is applied between the electrodes.

The command unit 5 is configured to adjust the frequency and the amplitude of the electric field produce by the movement means 15 during the implementation of the method by sending a movement signal 53 to the movement means 15.

For instance, the movement signal 53 can take several values, each value corresponding to a value of the frequency or the amplitude of the electric field.

A variation of the frequency of the electric field leads to a variation of the frequency of the periodical movement, and a variation of the amplitude of the electric field leads to a variation of the amplitude of the periodical movement.

This permits advantageously to adjust the movement of the powder material 12 and therefore to adjust the impregnation rate.

Alternatively, the movement means could operate on purely mechanical principles. This would be particularly advantageous when the support 4 comprises conductive fibres, such as carbon fibres, because in that case an electric field would be perturbed by the conductive fibres resulting in a less efficient impregnation, for instance a non-uniform impregnation.

At the exit of the fourth station 23, the support 4 impregnated with the powder 12, i.e. the composite tape 1, passes into a fifth station 24. The fifth station 24 comprises a roller 18 of film 19 that is unwound to be associated with the upper face of the support, by any appropriate means, and in particular by joining the film 18 at each edge of the composite tape 1. The film 18 advantageously prevent the exit of the powder material 12 from the support 4.

The composite tape 1 is then wound at a final station 25 comprising a roll 31 in which the finished product, i.e. the tape 1, is wound.

The command unit 5 is also configured to adjust the speed of the conveyor belt 9, i.e. to adjust the time passed by the support 4 in the stations 21, 22, 23, by sending a speed signal 54 to a motor (not shown) of the conveyor belt. This has also an impact on the impregnation rate, the longer the support 4 stay in each station, the higher is the impregnation rate.

The speed signal 54 can take several values, each value corresponding to a different speed of the conveyor belt 9.

For instance, a variation of the speed of the conveyor belt 9 results in a variation of the time passed by the support 4 in the second station 21, and therefore result in a variation of the heating power applied by the heat source 6 to the support 4.

A variation of the speed of the conveyor belt 9 results in a variation of the time passed by the support 4 in the third station 22 and results therefore in a variation of the quantity of powder material deposited on the support 4.

A variation of the speed of the conveyor belt 9 results in a variation of the time passed by the support 4 in the fourth station 23 and results therefore to a certain extent in a variation of the impregnation rate of the powder 12 in the support 4.

It should be noted that the above described installation is not at all limitative, and the method according to the invention could be implemented by an installation comprising a different second station or no second station, a different third station, a different fourth station or no fourth station, and/or no fifth station 24.

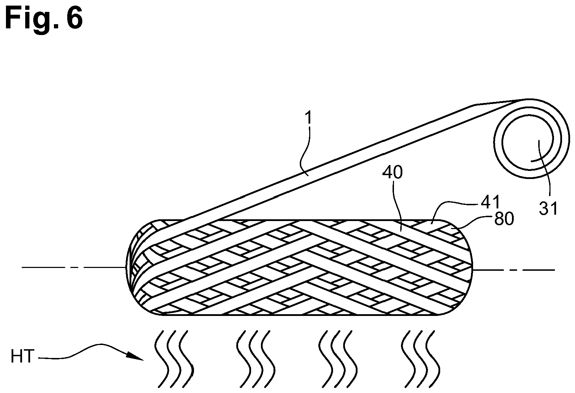

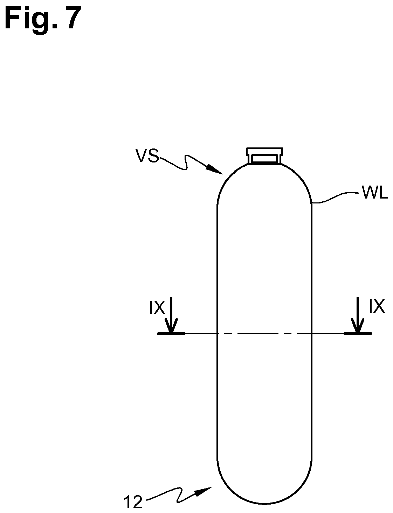

The roll 31 of composite tape 1 obtained by the above described method can be used in a method to produce a pressure vessel, for instance a method comprising the winding of a composite tape 1 as shown on figure 6 and 7.

A first step of the process for producing a vessel VS, comprise the formation of a leak tight barrier layer 80. The leak tight barrier layer 80 is an inner layer of the vessel 1, forming the inner surface of the vessel 1, and confers impermeability to the vessel.

The barrier layer 80 may be produce before the winding process in the form of a polymer liner bottle produced according to known processes, for instance by blow moulding. In such case, the liner bottle forms a mandrel around which the composite tape will be wound. Alternatively, the barrier layer 80 may be produced by winding of a polymer tape directly around a mandrel. An example of this alternative is described in the patent published under the reference EP2571671B1.

The method according to the invention subsequently comprises an unwinding of the roll 31 in order to wind the composite tape 1 directly around the barrier layer 80, in such way that at the end of the winding, the entire surface of the barrier layer 80 is covered by the composite tape, and simultaneously with the winding, an application of heat HT on the wounded tape, in order to perform a consolidation of the barrier layer and the composite tape 1.

The winding of the composite tape 1 of this embodiment is made according to an inter-weaving pattern, but all kind of pattern can be used. As apparent from figure 6, during the winding of the composite tape, some portions of the composite tape 1 overlaps, for instance overlapping portions 41 and 42.

The last step of the process comprises a cooling of the vessel 1 at ambient temperature in order to achieve the consolidation.

The consolidation step permits to form a continuity of material between the polymer material of the barrier layer 80 and the polymer material of the composite tape 1, and between the overlapping portions of the composite tape 1, for instance the overlapping portions 41 and 42.

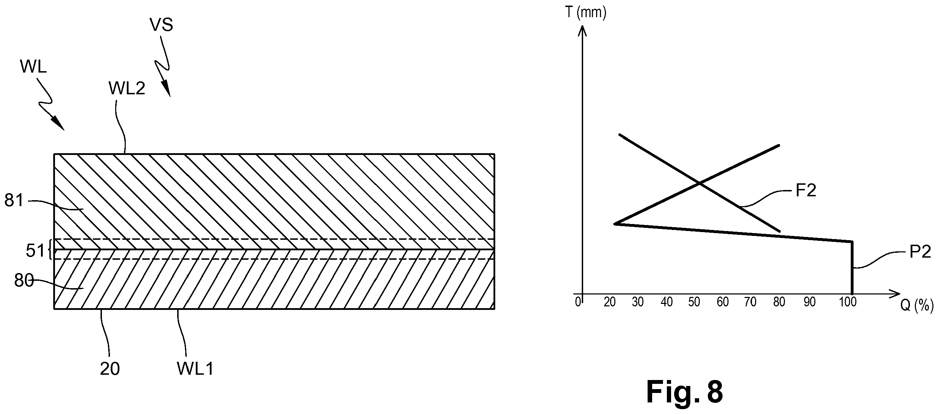

Figure 7 shows an embodiment of a composite vessel VS according to the invention, and figure 8 is a partial cross sectional view of the wall WL of the pressure vessel along the section line IX-IX of figure 8, together with a diagram showing the rates Q of polymer material and fibres in the fibre-reinforced polymer material along the thickness T of the wall WL of the vessel VS.

The wall WL of the composite vessel VS comprises a barrier layer 80 forming the inner surface WL1 of the vessel, and a composite layer resulting from the winding of the composite tape 1 around the barrier layer 80 and the consolidation previously described.

Although the wall WL of the vessel 1 comprises two layers 80 and 81, its structure is monolithic, that is to say there is a continuity of material along the thickness of the wall WL, and specifically a continuity between the different polymer materials.

The barrier layer 80 shown on figure 8 has an 1,5 millimetres thickness and comprise a first polymer material 60, for instance in this embodiment polyamide-6. The quantity of polyamide-6 is represented by a third curve P2.

This example is not at all limitative of the invention, and the barrier layer 3 of this embodiment could have included a different polymer material having similar properties for instance chosen among thermoplastic materials and thermoset materials, for instance polyamide 6-6, polyamide-12, polyolefin, etc.

The composite layer 81 has a thickness of 35 millimetres and the first fibre-reinforced polymer material 61 of the composite layer 81 has a rate of polymer material that varies continuously and linearly along the thickness T of the wall W.

The fourth curve F2 illustrates the quantity of fibres in the composite layer 81 along the thickness of the wall WL of the composite vessel VS.

Although the layers 80, 81 have been drawn so that they appear distinctively on figure 3, there is in fact a continuity of material between each adjacent layer, in such way that the interface between each adjacent layer comprise a 0,5 millimetre thick interface region which comprise a compatibilized polymer system present to bond the two adjacent layers. The thicknesses of the interface regions are not restricted by this embodiment and could have other values, for instance values comprises between 0,1 and 0,5 millimetre.

For instance, in this embodiment, the wall 2 of the pressure vessel 1 comprises an interface region 51 between the barrier layer 3 and the composite layer 81.

Since both the barrier layer 80 and the composite layer comprise the same polymer material, i.e. polyamide 6, the first interface region 51 only comprises polyamide-6 and the transition between the barrier layer 80 and the composite layer 81 is characterized by a change in fibres quantity, i.e. by a transition from a fibre-free layer to a fibre-reinforced layer.

Such a monolithic structure allows the vessel to withstand pressures greater than 1000 bars and allows to avoid mutual detachment of the layers 80 and 81, for instance in case of a brutal depressurization of the vessel.

The quantity of fibres near the interface region 51 represents 80% of the fibre-reinforced polymer material 61 and decreases continuously along the thickness of the first functional layer, until it reaches 20% near the second interface region 52.

Therefore, the rate of polymer material near the interface region 51 is 20% of the third fibre-reinforced polymer material 63 and increases continuously along the thickness of the first functional layer, until it reaches 80% near the outer surface WL2 of the wall WL.

The vessel VS according to the invention can be used in all sorts of application and integrated in all sort of system, such as vehicles, in particular trains, aircrafts, trucks, buses, and/or for all type application such as fuel tank, oxygen tank, fire extinguishing system, cooling or heating system, etc.

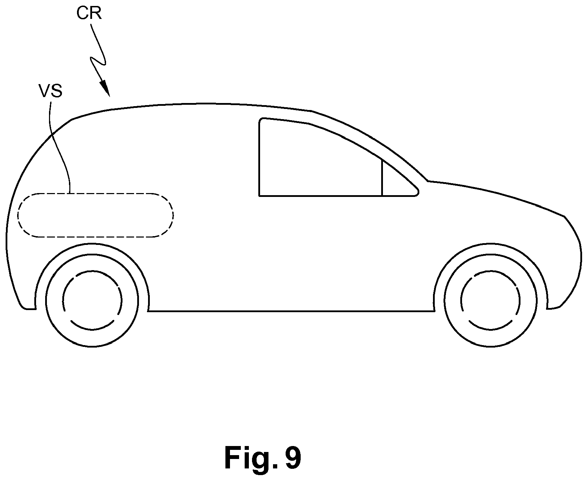

Figure 9 shows a specific example of an application of a pressure vessel 1 according to the invention, in the form of a fuel tank of a car CR.

## Claims

1. Composite tape comprising a fibre-reinforced polymer material (101) comprising at least one first polymer material and at least one fibrous material, **characterized in that** the fibre-reinforced polymer material has a rate (Q) of the at least one polymer material which varies along the composite tape (1).

2. Composite tape according to claim 1, wherein the rate (Q) varies according to a variation ranging between 0,03% per meter and 80% per meter.

3. Composite tape according to claim 1 - 2, wherein the rate (Q) varies continuously along the composite tape (1).

4. Composite tape according to any of claims 1 to 3, comprising a plurality of polymer materials.

5. Composite tape according to claim 4, comprising at least a first longitudinal portions comprising the at least one first polymer material and a second longitudinal portion comprising at least one second polymer material different from the at least one first polymer material, the first longitudinal portion and the second longitudinal portion being at least partially distinct or combined.

6. Composite tape according to any of claims 1 to 5, in which the at least one fibrous material comprises carbon fibres and/or glass fibres.

7. Method for producing composite tape comprising a fibre-reinforced polymer material comprising at least one first polymer material and at least one fibrous material, the process comprising an impregnating step comprising an impregnating of a support (4) with powder (12), the impregnating step comprising a deposition step comprising a deposition of the powder (12) on the support (4), the support (4) comprising the at least one fibrous material and the powder (12) comprising the at least one first polymer material, the impregnating step being performed in such way that the rate (Q) of the at least one polymer material in the fibre-reinforced polymer material varies along the tape.

8. Method according to claim 7, in which the impregnating step is performed in such way that the rate (Q) of the at least one polymer material in the fibre-reinforced polymer material varies continuously along the tape.

9. Method according to claim 7 or 8, in which the deposition step comprise a variation of the flow rate of the deposition of the powder (12) along the support (4).

10. Method according to any of claims 7 to 9, comprising, prior to the impregnating step, a heating step comprising an exposition of the support to a heat source (6), and a variation of the power of the heat source transmitted to the support (4).

11. Method according to any of claims 7 to 10, in which the impregnating step comprises, after or during the deposition step, an application of a periodical movement to the powder (12), the movement being relative to the support (4), and a variation of the frequency and/or the amplitude of the periodical movement along the support (4).

12. Method according to claim 7 to 11, in which the composite tape comprises a plurality of polymer materials, the method comprising:
- a first impregnating step of at least a first polymer material on a first longitudinal portion of the support and
- a second impregnating step of at least a second polymer material different from the first polymer material on a second longitudinal portion of the support, the first longitudinal portion and the second longitudinal portion being at least partially distinct or combined.

13. Method for producing a composite vessel, comprising a step of winding of a composite tape according to claim 1 to 6 around a liner or a mandrel.

14. Composite vessel produced by the method of claim 13, comprising a leak-tight barrier layer (80) forming an inner surface (WL1) of the vessel (1) and a composite layer located around the barrier layer (80) and comprising a fibre-reinforced polymer material (101), the rates of the quantity of the polymer material in the fibre-reinforced polymer material varies continuously along the thickness of the composite layer.

15. Composite vessel according to claim 14, the composite vessel being a fuel tank for a motorized vehicle (CR).
